(19) Europäisches Patentamt
European Patent Office
Office européen des brevets

(11) **EP 1 358 097 B1**

## (12) EUROPÄISCHE PATENTSCHRIFT

(45) Veröffentlichungstag und Bekanntmachung des Hinweises auf die Patenterteilung:
**07.12.2011 Patentblatt 2011/49**

(21) Anmeldenummer: **02708311.2**

(22) Anmeldetag: **25.01.2002**

(51) Int Cl.:
**B60T 8/1755** (2006.01)    **B60T 8/17** (2006.01)

(86) Internationale Anmeldenummer:
**PCT/EP2002/000756**

(87) Internationale Veröffentlichungsnummer:
**WO 2002/058976 (01.08.2002 Gazette 2002/31)**

(54) **VERFAHREN ZUR REGELUNG DER FAHRSTABILITÄT**

METHOD FOR REGULATING DIRECTIONAL STABILITY

PROCEDE DE REGULATION DE LA STABILITE DIRECTIONNELLE

(84) Benannte Vertragsstaaten:
**DE FR IT**

(30) Priorität: **26.01.2001 DE 10103705**

(43) Veröffentlichungstag der Anmeldung:
**05.11.2003 Patentblatt 2003/45**

(73) Patentinhaber: **Continental Teves AG & Co. oHG 60488 Frankfurt am Main (DE)**

(72) Erfinder: **HABERHAUER, Markus 64347 Griesheim (DE)**

(56) Entgegenhaltungen:
**DE-A- 4 314 827    DE-A- 19 525 217 US-A- 5 842 143**

EP 1 358 097 B1

## Beschreibung

Die Erfindung betrifft ein Verfahren zur Regelung der Fahrstabilität eines Fahrzeugs, insbesondere in einem elektronischen Stabilitätsprogramm (ESP), bei dem anhand von Überwachungsstrategien Signalfehler (Gierratenskalierungsfehler) von Gierratensensoren ermittelt werden.

Elektronische Stabilitätsprogramme dieser Art sind fahrdynamische Regelsysteme für Fahrzeuge, die dazu dienen, den Fahrer in kritischen Fahrsituationen während des Bremsens, Beschleunigens und Lenkens zu unterstützen und dort einzugreifen, wo der Fahrer selbst keine direkte Eingriffsmöglichkeit hat. Das Regelsystem unterstützt den Fahrer beim Bremsen, insbesondere auf einer Fahrbahn mit niedrigem oder wechselndem Reibwert, auf der das Fahrzeug wegen blockierender Räder nicht mehr steuerbar sein oder ins Schleudern geraten könnte, ferner beim Beschleunigen, wobei die Gefahr des Durchdrehens der Antriebsräder besteht, sowie schließlich beim Lenken in einer Kurve, in der das Fahrzeug über- oder untersteuern könnte. Insgesamt wird damit nicht nur der Komfort, sondern auch die aktive Sicherheit wesentlich verbessert.

Einem solchen Regelsystem liegt ein geschlossener Regelkreis zugrunde, der im Normalbetrieb des Fahrzeugs typische Regelaufgaben übernimmt und in extremen Fahrsituationen das Fahrzeug so schnell wie möglich abfangen soll. Als Istwertgeber sind dabei Sensoren zur Erfassung der verschiedenen fahrdynamischen Parameter von besonderer Bedeutung. Eine plausible Regelung setzt voraus, daß die Sensoren den Istzustand der Regelstrecke korrekt wiedergeben. Dies ist bei Fahrstabilitätsregelungen in extremen Fahrsituationen, in denen eine Regelabweichung schon innerhalb einer sehr kurzen Zeit ausgeregelt werden muß, besonders wichtig. Aus diesem Grunde müssen bei einem elektronischen Stabilitätsprogramm die ESP-Sensoren (Gierratensensor, Querbeschleunigungssensor, Lenkwinkelsensor) ständig überwacht werden. Eine entsprechende Online-Sensorüberwachung hat den Zweck, Fehler in den ESP-Sensoren frühzeitig zu erkennen, damit eine Fehlregelung, die das Fahrzeug in einen sicherheitskritischen Zustand bringen könnte, ausgeschlossen wird.

Aus der US 5,842,143 ist eine Schaltungsanordnung zur Auswertung von Gierratensensoren bekannt, bei der ein Steuergerät mit einem Gierratensensor und einer Vielzahl weiterer Sensoren verbunden ist, die vom Bewegungszustand des Fahrzeugs abhängige Signale liefern. Aus den Signalen der weiteren Sensoren wird eine Anzahl von Gierratenwerten berechnet, die über einen gewichteten Mittelwert eine Referenzgierrate ergeben. Das Steuergerät bildet die Differenz zwischen Referenzgierrate und der vom Gierratensensor gemessenen Gierrate und vergleicht diese mit einem Schwellwert. Bei Überschreiten des Schwellwerts wird ein Fehler des Gierratensensors angenommen. Weiterhin kann eine Plausibilitätsprüfung durchgeführt werden, bei der z.B. eine Änderung des Lenkwinkels mit einer Änderung der gemessenen Gierrate verglichen wird.

Bei den eingesetzten Gierratensensoren kann es produktionsbedingt zu Skalierungsfehler des Sensorsignals kommen. Hierbei handelt es sich um Fehler, die im Bereich von $\pm6\%...\pm20$ und $-50\%..-90$ so wie $+50\%...+330\%$ auftreten können. Skalierungsfehler die über 100% betragen werden als kritisch eingestuft, da sie das Fahrzeugverhalten durch eine Fehlregelung stark beeinflussen können.

Der Erfindung liegt deshalb die Aufgabe zugrunde, ein Verfahren und eine Vorrichtung zur Überwachung von Sensoren der eingangsgenannten Art zu schaffen, das/die eine insbesondere für ein elektronisches Stabilitätsprogramm (ESP) für Fahrzeuge erforderliche Zuverlässigkeit aufweist.

Erfindungsgemäß wird diese Aufgabe dadurch gelöst, dass ein gattungsgemäßes Verfahren so durchgeführt wird, dass bei einem stationären Fahrverhalten mit einer Einlenkbewegung ermittelt wird, ob der Wert des Gierratensignals $\psi_{Sensor}$ prozentual oder nominal von einem aus anderen, gemessenen oder berechneten Grössen des Fahrzeugs gebildeten redundanten Wert $\psi_{mittel}$ abweicht und dass in diesem Fall eine Beeinflussung der Regelung der Fahrstabilität unter der Bedingung erfolgt, dass ein aus dem Wert des Gierratensignals und dem redundanten Wert gebildeter Vergleichswert einen vorgegebenen Schwellenwert überschreitet.

Es ist zweckmässig, dass der Vergleich des Werts des Gierratensignals mit dem redundanten Wert erfolgt, wenn ein Zähler einen vorgegeben Wert erreicht.

Zur weiteren Verbesserung des Verfahrens ist es vorteilhaft, dass der Zähler in Abhängigkeit von einer verstrichenen Zeit erhöht wird, in der das stationäre Fahrverhalten mit Einlenkbewegung ermittelt wird.

Es ist besonders zweckmässig, dass ein stationäres Fahrverhalten ermittelt wird, wenn mindestens eine der folgenden Bedingungen erfüllt ist:

a) $|\dot\psi_{m_L} - \dot\psi_{mq}|<$ einem ersten Schwellenwert K1, vorzugsweise 12˚/s, insbesondere 7˚/s
b) $|\dot\psi_{m_L} - \dot\psi_{m_v}|<$ einem zweiten Schwellenwert K2, vorzugsweise 12˚/s, insbesondere 7˚/s
c) $|\delta_{LP}|<$ einem dritten Schwellenwert K3, vorzugsweise 200˚/s, insbesondere 100˚/s
d) $|\alpha_q|<$ einem vierten Schwellenwert K4, vorzugsweise o,7g, insbesondere 0.5g
e) eine Atiblockierregelung (ABS), ein elektronische Bremskraftverteilung (EBD), eine Bremseneingriffs-Antriebsschlupfregelung (BTCS)ist nicht aktiv und/oder
f) die Räder des Fahrzeugs zeigen kein instationäres Radverhalten (Schlupfkriterien)

g) das Fahrzeug zeigt kein übersteuerndes Fahrverhalten

h) das Fahrzeug zeigt kein untersteuerndes Fahrverhalten

Des weiteren ist es vorteilhaft, dass ein Einlenken ermittelt wird, wenn wenigstens die Bedingungen erfüllt sind, dass der Betrag des Lenkwinkels am Rad grösser einem Schwellenwert L1, vorzugsweise > 1˚, ist und der Betrag der Querbeschleunigung grösser einem Schwellenwert Q1, vorzugsweise > 0,081g ist.

Erfindungsgemäß wird der redundante Wert aus mindestens zwei modellbasierten Größen gebildet.

Vorzugsweise geht in die Bildung des redundanten Werts mindestens eine folgenden Größen ein: Radgeschwindigkeiten der Räder, die Spurweite, den Lenkradwinkel, den Radstand, die Fahrzeuggeschwindigkeit, Fahrzeugreferenzgeschwindigkeit, die charakteristische Fahrgeschwindigkeit oder die Lenkgeschwindigkeit.

Zur weiteren Verbesserung des Regelverhaltens ist es vorteilhaft, dass der redundante Wert durch Mittelwertbildung nach der der Beziehung $\dot{\psi}_{mittel} = \dfrac{(\dot{\psi}_{m_v} + \dot{\psi}_{m_L})}{2}$ gebildet wird, mit $\psi_{mv}$ nach der Beziehung

$$\dot{\psi}_{m_v} = \frac{v_{vr} - v_{vl}}{S} \quad \text{und mit } \psi_{mL} \text{ nach der Beziehung} \quad \dot{\psi}_{m_L} = \frac{\delta_L}{i_L l} \frac{v_{ref}}{(1 + (\frac{v_{ref}}{v_{ch}})^2)} \quad . \quad \text{Als weitere Modelle zur Ermitt-}$$

lung des redundanten Wertes $\psi_{mittel}$ können $\psi_{mq}$ oder $\psi_{mh}$ herangezogen werden.

Erfindungsgemäß wird als Vergleichswert ein prozentualer Differenzwert aus der Abweichung des Werts des Gierratensignals von dem redundanten Wert ermittelt.

Vorteilhaft werden bei erkanntem Skalierungsfehler zwei getrennte Zähler gestartet die den anstehenden Fehlerfall erfassen.

a) Ein erster Zähler wird erhöht wenn $GF_{rechts}$ > Max_Skalierungsfehlerschwelle (80%) bei einer stationären Rechtskurve ist.

b) Ein zweiter Zähler wird erhöht wenn $GF_{links}$ > Max_Skalierungsfehlerschwelle (80%) bei einer stationären Linkskurve.

Die beiden verwendeten Zähler werden auch benutzt wenn ein negativer Skalierungsfehler (<-50%) erkannt wird. Bei zuvor erkanntem positiven Skalierungsfehler werden zuerst die Zähler zurückgesetzt bevor sie erneut benutzt werden. Dies hat den Hintergrund, dass nie gleichzeitig ein positiver sowie negativer Skalierungsfehler auftreten kann. Bei Auftreten eines solchen Verhaltens ist ein Gierratensensoroffset zu erwarten.

Es ist daher zweckmässig, dass zur Festlegung eines Skalierungsfehler verdachts eine Marke (Bit) (SMAL_POS_GAINFAILURE_SUSPISHON) gesetzt wird, wenn der prozentuale Differenzwert einen Schwellenwert K5 (DELTA_YA>60%) überschreitet. Darüber hinaus ist es vorteilhaft, dass eine Marke (Bit) (POS_GAIN_FAILURE_SUSPISHION oder NEG_GAIN_FAILURE_SUSPISHION) gesetzt wird, wenn der prozentuale Differenzwert einen positiven Schwellenwert K6 (DELTA-YR>80%)oder negativen Schwellenwert K7 (DELTA_YR<-50%)überschreitet.

Vorteilhaft wird der Wert eines Zählers für einen positiven oder der Wert eines Zählers für einen negativen Skalierungsfehlerverdacht erhöht, wenn ein positiver (>80%)oder negativer Skalierungsfehler (<-50%) ermittelt wurde.

Ausserdem ist es vorteilhaft, dass eine ESP Ein- und/oder Austrittsschwelle um einen modellbasierten redundanten Wert $\psi_{mL}$ erhöht wird, der mit einem Faktor des prozentualen Differenzwertes $\Delta\psi(\%)$ gewichtet wird, wenn der Wert des Zählers einen Schwellenwert K8 überschreitet.

Es ist weiterhin vorteilhaft, dass der modellbasierte redundante Wert nach der folgenden Beziehung

$$\dot{\psi}_{m_L} = \frac{\delta_L}{i_L l} \frac{v_{ref}}{(1 + (\frac{v_{ref}}{v_{ch}})^2)} \quad \text{gebildet wird. Die Eintrittsschelle wird mit einem Korrekturwert gewichtet.}$$

Haben nun beide Zähler(POS GAIN FAILURE SUSPISHION oder NEG_GAIN_FAILURE_SUSPISHION), eine festgelegte Zeit (z.B.maximal 3s), diesen Fehler erkannt, kommt es zu einer Systemstillegung. Es ist daher zeckmässig, dass die Regelung der Fahrstabilität beendet wird, wenn ein Zähler einen neunten Schwellenwert K9 erreicht oder überschritten hat und die Anzahl der Überschreitung einer vorgegebenen Vorschrift genügt. Nach Massgabe von ermittelten Fahrsituationen ist es darüber hinaus vorteilhaft dann eine Systembeeinflussung durchzuführen, wenn erkannte Fehler in einer Richtung (Linkskurve oder Rechtskurve) zwei mal erneut bestätigt wurden, d.h erkannte Fehler in einer Richtung, die zwei mal bestätigt wurden, werden als Fehler anerkannt. Beispielsweise kann die Gierratenregelung(ESP =AYC Funktion) oder die AYC und Antriebsschlufregelung (TCS Funktion) abgeschaltet werden. Dies wird deutlich im Stadtverkehr, wo man des öfteren mehr Rechts- als Linkskurven zu verzeichnen hat.

Vorteilhaft ist, dass bei der Beendigung der Regelung der Fahrstabilität ein Fehlereintrag in einem Fehlerspeicher erfolgt.

Zur weiteren Verbesserung des Verfahrens ist es zweckmässig, dass alle Zähler zurückgesetzt werden, wenn ein ESP-Übersteuerzustand ermittelt wird.

Es ist besonders zweckmässig, dass alle Zähler zurückgesetzt werden, wenn in einer vorgegebenen Zeitspanne keine weiteren Skalierungsschwellenüberschreitungen erkannt wurden.

Mit dem Verfahren nach der Erfindung erfolgt vorteilhaft die

a) Erkennung eines Skalierungsfehlers innerhalb einer kurzen Zeit. Bei einer Fehlergröße >80% oder <-50%.
b) Beeinflussung der ESP-Regelstrategie bei auftretendem Skalierungsfehler mit dem Ziel, Fehlreaktionen des Reglers zu vermeiden.
c) Vermeidung von ungerechtfertigten Fehlerkennungen.

Überwachungsbeschreibung:

Bei dieser Überwachungsmethode, wie sie in dem Flussdiagramm dargestellt ist, werden mindestens zwei prozentuale Abweichungen des eigentlichen Gierratensensorsignals und deren Nachbildung berechnet. Hierbei werden vorzugsweise zwei oder mehr Nachbildungen herangezogen, zum Einen aus dem Lenkwinkel und zum Zweiten aus den Radsignalen oder zum Dritten aus der Querbeschleunigung. Ermittelt wird der geschätzte Skalierungsfehler bei einer stationären Rechtskurve $GF_{rechts}$ und/oder der geschätzte Skalierungsfehler bei einer stationären Linkskurve $GF_{links}$.

Die Skalierungsfehler werden bei jeder erkannten stationären Kurve neu berechnet und für die Erkennung benutzt. Das Flussdiagramm hat die Situationserkennung und die Schätzung der Skalierungsfehler zum Gegenstand.

Situationserkennung:

Ausgehend von einer gegebenen, zu bestimmenden Fahrsituation 8 wird zunächst in Raute 14 festgestellt, ob eine Einlenkbewegung vorliegt oder nicht. Die Erkennung einer Einlenkbewegung (Erkennung einer Kurve) erfolgt durch jeweils einen Vergleich einer den Lenkwinkel und die Querbeschleunigung wiedergebenden Grösse mit einem entsprechenden Schwellenwert L1, Q1 nach den Beziehungen:

|Lenkwinkel| > L1, vorzugsweise 1˚ am Rad
|Querbeschleunigung| > Q1, vorzugsweise 0,081g

Die Erkennungszeit beträgt eine vorgegebene Zeitspanne, z.B. 1 loop. In jeder Fahrsituation fliesst in die Situationserkennung eine das Drehverhalten der Räder 10 und eine den Lenkwinkel wiedergebende Grösse 12 ein. Werden die Bedingungen der Kurvenerkennung nicht erfüllt, so wird in 98 der Durchlauf zur Erkennung von Skalierungsfehler beendet

Wird eine Kurve in 16 erkannt, wird in Raute 20 festgestellt, ob ein stationäres Fahrverhalten vorliegt oder nicht. Die Erkennung eines stationären Fahrverhaltens (Stationär Erkennung) liegt vor, wenn die Bedingungen

$\dot{\psi}_{mL} - \dot{\psi}_{mA} < K1$ vorzugsweise 7˚/s
$\dot{\psi}_{mL} - \dot{\psi}_{mv} < K2$, vorzugsweise 7˚/s
$\delta_{LP} < K3$, vorzugsweise 100˚/s
$\alpha_q < K4$, vorzugsweise 0.5g
kein ABS, kein EBD, kein BTCS
kein instationäres Radverhalten (Schlupfkriterien)
kein übersteuerndes Fahrverhalten
kein untersteuerndes Fahrverhalten

erfüllt sind. Dabei steht K für Schwellenwerte. Wird in 26 kein stationäres Fahrverhalten festgestellt, wird der Zähler in 28 entsprechend dem Durchlauf um 1 erniedrigt und der Durchlauf in 98 beendet. Die Erkennungszeit für ein stationäres Fahrverhalten beträgt in 22 eine vorgegebene Zeitspanne, vorzugsweise ≥7 loops, z.B. 8 loops (1 loop=7ms). Liegt die Erkennungszeit unter der vorgegebenen Zeitspanne, wird der Zähler in 24 entsprechend dem Durchlauf um 1 erhöht und der Durchlauf in 98 beendet.

In 30 wird eine Marke (Bit) gesetzt, wenn das stationäre Fahrverhalten über die vorgegebene Zeitspanne von z.B ≥7 loops in 22 festgestellt wurde. 32 zeigt die Mittelwertbildung von Redundanzen nach der Beziehung

$$\dot{\psi}_{mittel} = \frac{(\dot{\psi}_{m_v} + \dot{\psi}_{m_L})}{2}$$ aus mindestens zwei, vorzugsweise vier, von für die Überwachung des Gierratensensors zur Verfügung stehenden vier redundanten Modelle, solange diese gültig sind. Die mathematische Realisierung der Prozessmodelle und ihre Gültigkeit ist in Tabelle 1 zusammengefasst. Die Definition der in der Tabelle verwendeten Symbole ist der Beschreibung als Anhang beigefügt:

Tabelle 1:

| Tabelle 1 | Gleichungen | Gültigkeitsbedingungen |
|---|---|---|
| Modell G1 | $\dot{\psi}_{m_v} = \dfrac{v_{vr} - v_{vl}}{S}$ | Die vorderen zwei Räder sind nicht in Schlupf, ihre Fehlerflags sind nicht gesetzt und die Nachbildung liegt im gültigen Bereich. |
| Modell G2 | $\dot{\psi}_{m_h} = \dfrac{v_{hr} - v_{hl}}{S}$ | Die hinteren zwei Räder sind nicht in Schlupf, ihre Fehlerflags sind nicht gesetzt und die Nachbildung liegt im gültigen Bereich. |
| Modell G3 | $\dot{\psi}_{m_q} = \dfrac{a_q}{v_{ref}}$ | Die Fahrgeschwindigkeit muß großer als Null sein. |
| Modell G4 | $\dot{\psi}_{m_L} = \dfrac{\delta_L}{i_L l} \dfrac{v_{ref}}{(1 + (\frac{v_{ref}}{v_{ch}})^2)}$ | keine Gegenlenkung, keine große Lenkung bei hoher Fahrzeuggeschwindigkeit. |

34 berechnet einen prozentualen Differenzwert $\Delta\dot{\psi}(\%) = (\dot{\psi}_{Sensor} / \dot{\psi}_{mittel})$ aus der Abweichung des Werts des Gierratensignals von dem redundanten Mittelwert.

In dem Flussdiagramm ist nur der Fehlerfall für eine Rechtskurve dargestellt. Die Überwachung für eine Linkskurve ist identisch. Die Beschreibung (ab Raute 50 des Flussdiagramms) bezieht sich daher exemplarisch auf eine Rechtskurve.

Wenn der prozentuale Differenzwert $\Delta\dot{\psi} > 60\%$ ist, wird ein positiver Skalierungsfehlerverdacht (GAINFAILURES) angenommen, dies wird durch eine Marke (Bit) (SMAL_POS_GAINFAILUR_SUSPICION=l) in 52 dokumentiert.

1. In 54 wird festgestellt, ob der prozentuale Differenzwert $\Delta\dot{\psi} > 80\%$ ist. Danach wird in 56 abgefragt, ob im vorangegangen Durchlauf (loop) negativer Skalierungsfehlerverdacht (NEG_GAIN_ FAILURE_SUSPISHION=1) vorgelegen hat und im momentanen Durchlauf ein positiver Skalierungsfehlerverdacht vorliegt. Liegt ein positver Skalierungsfehlerverdacht vor wird der negative Skalierungsfehlerverdacht (NEG_GAIN_FAILURE_SUSPISHION=0) in 58 zurückgesetzt und der für den positiven und negativen Skalierungsfehlerverdacht gemeinsame Zähler (GAIN_FL_SUSP_CNT_R) in 58 zurückgesetzt, weil man davon ausgeht, dass ein positiver sowie negativer Fehler nicht gleichzeitig auftreten kann. Dieses Vorgehen verringert den benötigten RAM Speicher, es hilft RAM Ressourcen zu sparen. In 60 wird der positive Skalierungsfehlerverdacht bestätigt, der Fehlerzähler (GAIN_FL_SUSP_CNT_R++) um eins erhöht.

Der mit 1) gekennzeichnete Durchlauf 52-60 ist mit dem Durchlauf 52.1-60.1 identisch, wenn ein negativer Skalierungsfehlerverdacht vorliegt (prozentuale Differenzanteil < -50%)

Der nun folgende Durchlauf des Flussdiagramms ist für positive und negative Fehler identisch.

Wenn einer der beiden Skalierungsfehlerzähler 60, 60.1 in 70 für z.B. 175msec. bzw. 25 loops oder vorzugsweise 70msec. bzw. 10 loops einen Fehlerverdacht hat (bei einem Skalierungsfehler >80%), und der Skalierungsfehler ist nun größer als 60% dann wird die ESP(AYC)Regeleintrittsschwelle sowie die ESP Regelaustrittsschwelle angehoben. Aufgrund der in 70 vorgesehenen Zeitdauer, kann eine Reduktion des Skalierungsfehlers von >80% auf >60% erfolgen. Dabei wird in 72 auf die Ein- und Austrittsschwelle ein Faktor des prozentualen Differenzwertes $\Delta\dot\psi(\%)$ von der gefilterten

Gierratennachbildung aus dem Lenkwinkel ( $\dot\psi_{m_L} = \dfrac{\delta_L}{i_L l} \dfrac{v_{ref}}{(1 + (\frac{v_{ref}}{v_{ch}})^2)}$ ) gewichtet (reduziert) mit einem vorgegebenen Korrekturwert auf die ESP Eintrittsschwelle(-2° pro sec.) nur auf die Austrittsschwelle addiert, d.h. die Schwellen werden um den berechneten Prozentsatz angehoben.

Sollte nun der Fehlercounter in 74 auf einen Wert, beispielsweise auf 15 oder 30, gezählt haben, dann wird dies in 76 als Fehler angesehen (GAIN_FAILURE_DETECTED_R=1) .

Die bis dahin obengenannte Beschreibung wird für Rechts- so wie Linkskurve separat durchgeführt.

Hat nun diese Überwachung 78 zwei mal den Fehler in die gleiche Richtung z.B. (GAIN_FAILURE_DETECTED_R==2) oder einen für rechts und einen für links erkannt wird dies als entgültige Fehlererkennung 80 angenommen und das System stillgelegt mit Fehlereintrag (SET_FAILURE=GAIN_FAILURE).

Diese Fehlerzähler werden alle zurückgesetzt, wenn ein Übersteuern erkannt wird oder wenn im weiteren stationären Kurvenverlauf für eine Zeitdauer, z.B. zwischen 15sec. und 5min., keine weitere Skalierungsschwellenüberschreitung erkannt wird.

Die oben verwendeten Symbole sind wie folgt definiert:

$v_{vr}$       Radgeschwindigkeit vorne rechts;

$v_{hr}$       Radgeschwindigkeit hinten rechts;

$v_{hl}$       Radgeschwindigkeit hinten links;

$v_{vl}$       Radgeschwindigkeit vorne links;

$v_{ref}$       Fahrzeugreferenzgeschwindigkeit;

$\dot\psi_{m_v}$       Modellgierrate aus den Radgeschwindigkeiten vorne;

$\dot\psi_{m_h}$       Modellgierrate aus den Radgeschwindigkeiten hinten;

$\dot\psi_{m_q}$       Modellgierrate aus der Querbeschleunigung;

$\dot\psi_{m_L}$       Modellgierrate aus dem Lenkwinkel;

$\alpha_q$       Querbeschleunigung;

$\delta_L$       Lenkradwinkel;

$i_L$       Lenkübersetzung;

$l$       Radstand;

$S$       Spurweite des Fahrzeuges;

$v_{ch}$       charakteristische Fahrgeschwindigkeit.

$\delta_{LP}$       Lenkwinkelgeschwindigkeit

$$\dot{\psi}_{m_L} = \frac{\delta_L}{i_L l} \frac{v_{ref}}{(1+(\frac{v_{ref}}{v_{ch}})^2)}$$

$$\dot{\psi}_{mittel} = \frac{(\dot{\psi}_{m_v} + \dot{\psi}_{m_L})}{2}$$

$$\dot{\psi}_{m_q} = \frac{a_q}{v_{ref}}$$

$$\dot{\psi}_{m_v} = \frac{v_{vr} - v_{vl}}{S}$$

$$\dot{\psi}_{m_h} = \frac{v_{hr} - v_{hl}}{S}$$

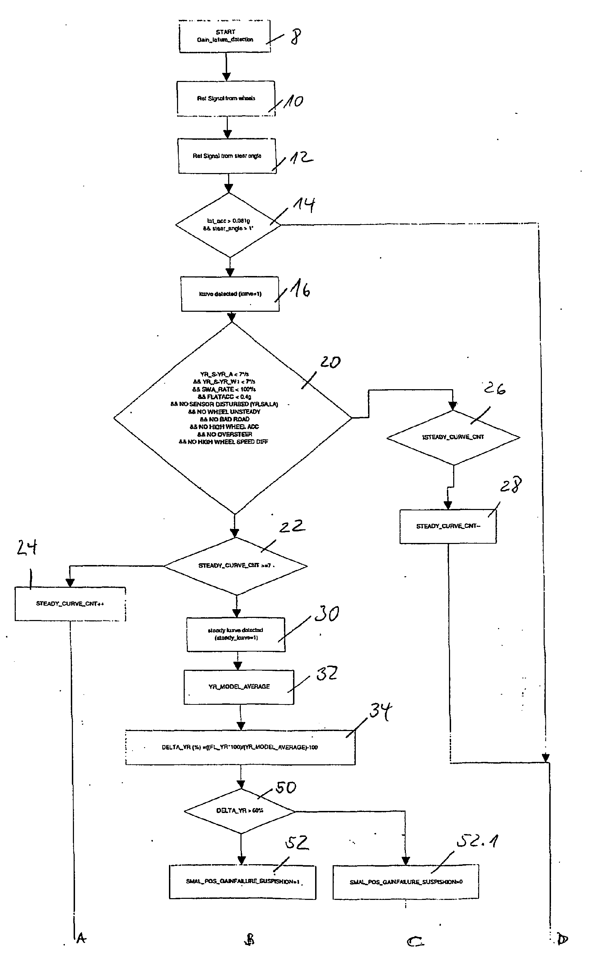

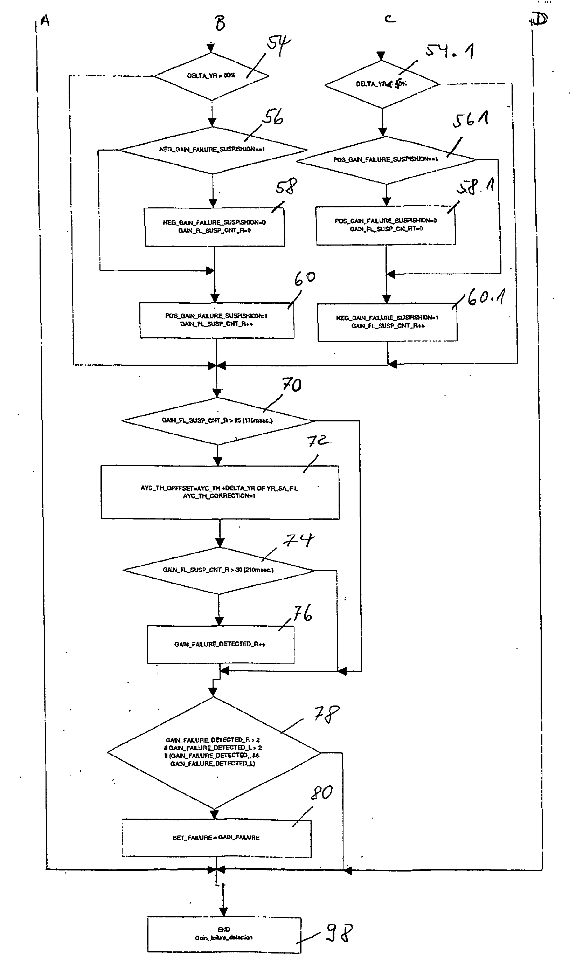

**Patentansprüche**

1. Verfahren zur Regelung der Fahrstabilität eines Fahrzeugs, bei dem anhand von Überwachungsstrategien Signalfehler von Gierratensensoren ermittelt werden, wobei bei einem stationären Fahrverhalten mit einer Einlenkbewegung ermittelt wird, ob der Wert des Gierratensignals ($\dot{\psi}_{Sensor}$) prozentual oder nominal von einem aus anderen, gemessenen oder berechneten Größen des Fahrzeugs gebildeten redundanten Wert ($\dot{\psi}_{mittel}$) abweicht **dadurch gekennzeichnet, dass** in diesem Fall eine Beeinflussung der Regelung (72, 80) der Fahrstabilität unter der Bedingung erfolgt, dass ein aus dem Wert des Gierratensignals ($\dot{\psi}_{Sensor}$) und dem redundanten Wert ($\dot{\psi}_{mittel}$) gebildeter Vergleichswert ($\Delta\dot{\psi}(\%)$) mindestens einen vorgegebenen Schwellenwert (>80%, >60%) über eine vorgegebene Zeitdauer (70) überschreitet, wobei der Vergleichswert als prozentualer Differenzwert $\Delta\dot{\psi}(\%) = (\dot{\psi}_{Sensor} / \dot{\psi}_{mittel})$ aus der Abweichung des Werts des Gierratensignals ($\dot{\psi}_{Sensor}$) von dem redundanten Wert ($\dot{\psi}_{mittel}$)ermittelt (34) wird, und der redundante Wert aus mindestens zwei modellbasierten Größen ($\dot{\psi}_{m_v}$, $\dot{\psi}_{m_L}$) gebildet wird.

2. Verfahren nach Anspruch 1, **dadurch gekennzeichnet, dass** der Vergleich des Werts des Gierratensignals mit dem redundanten Wert erfolgt, wenn ein Zähler (22) einen vorgegeben Wert erreicht.

3. Verfahren nach Anspruch 1 oder 2, **dadurch gekennzeichnet, dass** der Zähler (22) in Abhängigkeit von einer verstrichenen Zeit (≥7) erhöht wird, in der das stationäre Fahrverhalten mit Einlenkbewegung ermittelt wird.

4. Verfahren nach einem der Ansprüche 1 bis 3, **dadurch gekennzeichnet, dass** ein stationäres Fahrverhalten (20) ermittelt wird, wenn mindestens eine der folgenden Bedingungen erfüllt ist:

   a) $|\dot{\psi}_{m_L} - \dot{\psi}_{m_q}|<$ einem ersten Schwellenwert K1, vorzugsweise 12˚/s, insbesondere 7˚/s, wobei $\dot{\psi}_{m_{L,q}}$ einer Modellgserrate aus dem Lenkwinkel die Querbeschleunigung entspricht
   b) $|\dot{\psi}_{m_L} - \dot{\psi}_{m_v}|<$ einem zweiten Schwellenwert K2, vorzugsweise 12˚/s, insbesondere 7˚/s, wobei $\dot{\psi}_{m_v}$ einer Modellgierrate aus den Radgesdwindigkeiten vorne entsprichrt
   c) $|\delta_{LP}| <$ einem dritten Schwellenwert K3, vorzugsweise 200˚/s, insbesondere 100˚/s, wobei $\delta_{LP}$ die Lenkwinkelgeschwindigkeit ist
   d) $|\alpha_q|<$ einem vierten Schwellenwert K4, vorzugsweise 0,7g, insbesondere 0.5g, wobei $Q_q$ die querbeschleunigung ist,
   e) eine Atiblockierregelung (ABS), ein elektronische Bremskraftverteilung (EBD), eine Bremseneingriffs-Antriebsschlupfregelung (BTCS)ist nicht aktiv
   f) die Räder des Fahrzeugs zeigen kein instationäres Radverhalten
   g) das Fahrzeug zeigt kein übersteuerndes Fahrverhalten und/oder

h) das Fahrzeug zeigt kein untersteuerndes Fahrverhalten

**5.** Verfahren nach einem der Ansprüche 1 bis 4, **dadurch gekennzeichnet, dass** ein Einlenken ermittelt wird, wenn wenigstens die Bedingungen erfüllt sind:

|Lenkwinkel| am Rad > Schellenwert L1, vorzugsweise 1˚, und
|Querbeschleunigung| > Schwellenwert Q1, vorzugsweise 0,081g ist.

**6.** Verfahren nach einem der Ansprüche 1 bis 5, **dadurch gekennzeichnet, dass** mindestens eine der folgenden Größen in die Bildung des redundanten Werts eingeht:

Radgeschwindigkeiten der Räder, die Spurweite, den Lenkradwinkel, den Radstand, die Fahrzeuggeschwindigkeit, Fahrzeugreferenzgeschwindigkeit, die charakteristische Fahrgeschwindigkeit oder die Lenkgeschwindigkeit.

**7.** Verfahren nach Anspruch 6, **dadurch gekennzeichnet, dass** der redundante Wert durch Mittelwertbildung (32) nach der der Beziehung $\dot{\psi}_{mittel} = \dfrac{(\dot{\psi}_{m_v} + \dot{\psi}_{m_L})}{2}$ vorzugsweise mit $\dot{\psi}_{mv}$ nach der Beziehung $\dot{\psi}_{m_v}$ und Mit $\dot{\psi}_{m_L}$

nach der Beziehung $\dot{\psi}_{m_L} = \dfrac{\delta_L}{i_L l} \dfrac{v_{ref}}{(1 + (\frac{v_{ref}}{v_{ch}})^2)}$ gebildet wird.

**8.** Verfahren nach einem der Ansprüche 1 bis 7, **dadurch gekennzeichnet dass** eine Marke (SMAL_POS_GAINFAILURE_SUSPISHON) gesetzt (52) wird, wenn der prozentuale Differenzwert einen Schwellenwert K5 (DELTA-YA>60%) überschreitet.

**9.** Verfahren nach einem der Ansprüche 1 bis 8, **dadurch gekennzeichnet, dass** eine Marke (POS_GAIN_FAILURE_SUSPISHION oder NEG_GAIN_FAILURE_SUSPISHION) gesetzt wird, wenn der prozentuale Differenzwert einen Schwellenwert K6 (DELTA-YR>80%)oder Schwellenwert K7 (DELTA_YR<-50%)überschreitet.

**10.** Verfahren nach einem der Ansprüche 1 bis 9, **dadurch gekennzeichnet, dass** der Wert eines Zählers (60) für einen positiven oder der Wert eines Zählers (60.1) für einen negativen Skalierungsfehlerverdacht erhöht wird, wenn ein positiver oder negativer Skalierungsfehler (>80%) ermittelt wurde.

**11.** Verfahren nach einem der Ansprüche 1 bis 10, **dadurch gekennzeichnet, dass** eine ESP Ein- und/oder Austrittsschwelle um einen modellbasierten redundanten Wert ($\dot{\psi}_{mL}$) erhöht wird, der mit einem Faktor des prozentualen Differenzwertes ($\Delta\dot{\psi}(\%)$) gewichtet wird, wenn der Wert des Zählers (60, 60.1) einen Schwellenwert K8 (70) überschreitet.

**12.** Verfahren nach Anspruch 11, **dadurch gekennzeichnet, dass** der modellbasierte redundante Wert nach der folgenden Beziehung $\dot{\psi}_{m_L} = \dfrac{\delta_L}{i_L l} \dfrac{v_{ref}}{(1 + (\frac{v_{ref}}{v_{ch}})^2)}$ gebildet und die ESP Eintrittsschwelle mit einem Korrekturwert (-2˚/s) gewichtet wird.

**13.** Verfahren nach einem der Ansprüche 1 bis 12, **dadurch gekennzeichnet, dass** die Regelung der Fahrstabilität beendet wird, wenn der Zähler (78) einen Schwellenwert K9 erreicht oder überschritten hat und die Anzahl der Überschreitung einer vorgegebenen Vorschrift genügt.

**14.** Verfahren nach einem der Ansprüche 1 bis 13, **dadurch gekennzeichnet, dass** bei der Beendigung der Regelung der Fahrstabilität ein Fehlereintrag in einem Fehlerspeicher erfolgt.

**15.** Verfahren nach einem der Ansprüche 1 bis 14, **dadurch gekennzeichnet, dass** die Zähler zurückgesetzt werden, wenn ein ESP-Übersteuerzustand ermittelt wird.

**16.** Verfahren nach einem der Ansprüche 1 bis 15, **dadurch gekennzeichnet, dass** die Zähler zurückgesetzt werden, wenn in einer vorgegebenen Zeitspanne in einer stationären Kurve keine Skalierungsschwellenüberschreitung (50, 54.1) erkannt wird.

**Claims**

**1.** Method for regulating the directional stability of a vehicle, in which signal errors are determined by yaw rate sensors on the basis of monitoring strategies, wherein when there is a steady-state driving behaviour with a turning in movement it is determined whether the value of the yaw rate signal ($\dot{\psi}_{Sensor}$) deviates in percentage or nominal terms from a redundant value ($\dot{\psi}_{mean}$) which is formed from other, measured or calculated variables of the vehicle, **characterized in that** in this case the process of regulating (72, 80) the directional stability is influenced according to the condition that a comparison value ($\Delta\dot{\psi}(\%)$) which is formed from the value of the yaw rate signal ($\dot{\psi}_{Sensor}$) and the redundant value ($\dot{\psi}_{mean}$) exceeds at least one predefined threshold value (>80%, >60%) over a predefined time period (70), wherein the comparison value is determined (34) as a percentage difference value ($\Delta\dot{\psi}(\%) = (\dot{\psi}_{Sensor})/(\dot{\psi}_{mean})$ from the deviation of the value of the yaw rate signal ($\dot{\psi}_{Sensor}$) from the redundant value ($\dot{\psi}_{mean}$), and the redundant value is formed from at least two model-based variables ($\dot{\psi}_{m_n m_v}, _{m_L} \dot{\psi}_{m_L}$).

**2.** Method according to Claim 1, **characterized in that** the comparison of the value of the yaw rate signal with the redundant value is carried out when a counter (22) reaches a predefined value.

**3.** Method according to Claim 1 or 2, **characterized in that** the counter (22) is incremented as a function of an elapsed period of time ($\geq 7$) in which the steady-state driving behaviour with a turning-in movement is determined.

**4.** Method according to one of Claims 1 to 3, **characterized in that** a steady-state driving behaviour (20) is determined if at least one of the following conditions is met:

a) $|\dot{\psi}_{m_L} - \dot{\psi}_{mq}| <$ a first threshold value K1, preferably 12˚/s, in particular 7˚/s, wherein $\dot{\psi}_{m_L}$ corresponds to a a model yaw rate from the steering angle of the lateral acceleration,
b) $|\dot{\psi}_{m_L} - \dot{\psi}_{m_q}| <$ a second threshold value K2, preferably 12˚/s, in particular 7˚/s, wherein $\dot{\psi}_{m_v}$ corresponds to a model yaw rate from the wheel speeds at the front,
c) $|\delta_{LP}| <$ a third threshold value K3, preferably 200˚/s, in particular 100˚/s, wherein $\delta_{LP}$ is the steering angle speed,
d) $|\alpha_q| <$ a fourth threshold value K4, preferably 0.7 g, in particular 0.5 g, wherein aq is the lateral acceleration,
e) an anti-lock brake controller (ABS), an electronic braking force distributor (EBD), a braking intervention traction control system (BTCS) is not active,
f) the wheels of the vehicle do not exhibit any non-steady-state wheel behaviour,
g) the vehicle does not exhibit any oversteering driving behaviour,
and/or
h) the vehicle does not exhibit any understeering driving behaviour.

**5.** Method according to one of Claims 1 to 4, **characterized in that** turning in is determined if at least the following conditions are met:

|steering angle| at the wheel > threshold value L1,
preferably 1˚, and |lateral acceleration| > threshold value Q1, preferably 0.081 g.

**6.** Method according to one of Claims 1 to 5, **characterized in that** at least one of the following variables is included in the formation of the redundant value:

wheel speeds of the wheels, the wheel gauge, the steering wheel angle, the wheel base, the vehicle speed, vehicle reference speed, the characteristic velocity or the steering speed.

**7.** Method according to Claim 6, **characterized in that** the redundant value is formed by forming mean values (32) according to the relation

$$\dot{\psi}_{mean} = \frac{(\dot{\psi}_{m_v} + \dot{\psi}_{m_L})}{2} \quad,$$ preferably where $\dot{\psi}_{mv}$ is formed according to the relation $\dot{\psi}_{m_v} = \frac{v_{vr} - v_{vl}}{S}$ and

where $\dot{\psi}_{mL}$ is formed according to the relation $\dot{\psi}_{m_L} = \frac{\delta_L}{i_L l} \frac{v_{ref}}{(1 + (\frac{v_{ref}}{v_{ch}})^2)}$ .

8. Method according to one of Claims 1 to 7, **characterized in that** a mark (SMAL_POS_GAIN_FAILURE_SUSPICION) is set (52) if the percentage difference value exceeds a threshold value K5 (DELTA_YA>60%).

9. Method according to one of Claims 1 to 8, **characterized in that** a mark (POS_GAIN_FAILURE_SUSPICION or NEG_GAIN_ FAILURE_SUSPICION) is set if the percentage difference value exceeds a threshold value K6 (DELTA_YR>80%) or threshold value K7 (DELTA_YR<-50%).

10. Method according to one of Claims 1 to 9, **characterized in that** the value of a counter (60) is incremented for a suspicion of a positive scaling error or the value of a counter (60.1) is incremented for a suspicion of a negative scaling error if a positive or negative scaling error (>80%) has been determined.

11. Method according to one of Claims 1 to 10, **characterized in that** an ESP entry threshold and/or exit threshold is increased by a model-based redundant value ($\dot{\psi}_{mL}$) which is weighted with a factor of the percentage difference value ($\Delta\dot{\psi}(\%)$) if the value of the counter (60, 60.1) exceeds a threshold value K8 (70).

12. Method according to Claim 11, **characterized in that** the model-based redundant value is formed according to the

following relation $\dot{\psi}_{m_L} = \frac{\delta_L}{i_L l} \frac{v_{ref}}{(1 + (\frac{v_{ref}}{v_{ch}})^2)} \quad,$ and the ESP entry threshold is weighted with a correction value (-2˚/s).

13. Method according to one of Claims 1 to 12, **characterized in that** the process of regulating the directional stability is ended if the counter (78) reaches or has exceeded a threshold value K9 and the number of times said threshold value K9 has been exceeded satisfies a predefined rule.

14. Method according to one of Claims 1 to 13, **characterized in that** when the process of regulating the directional stability is ended, an error entry is made in an error memory.

15. Method according to one of Claims 1 to 14, **characterized in that** the counters are reset if an ESP oversteering state is determined.

16. Method according to one of Claims 1 to 15, **characterized in that** the counters are reset if no transgression (50, 54.1) of a scaling threshold is detected in a steady-state curve in a predefined time period.

**Revendications**

1. Procédé pour régler la stabilité de conduite d'un véhicule, dans lequel des erreurs de signal sont déterminées à l'aide de stratégies de contrôle par des capteurs de taux de lacet, dans lequel on détermine dans le cas d'un comportement de conduite stationnaire avec un mouvement de braquage si la valeur du signal du taux de lacet ($\psi_{Sensor}$) s'écarte en pourcentage ou de façon nominale d'une valeur redondante ($\psi_{mittel}$), formée à partir d'autres grandeurs mesurées ou calculées du véhicule, **caractérisé en ce que**, dans ce cas, on a une influence sur le réglage (72, 80) de la stabilité de conduite à la condition qu'une valeur de comparaison ($\Delta\psi(\%)$) formée à partir de la valeur du signal du taux de lacet ($\psi_{sensor}$) et de la valeur redondante ($\psi_{mittel}$) dépasse au moins une valeur seuil prédéfinie (>80 %, >60 %) au-delà d'une durée prédéfinie (70), la valeur de comparaison étant déterminée comme valeur différentielle en pourcentage $\Delta\psi(\%) = (\psi_{Sensor}/\psi_{mittel})$ à partir de l'écart entre la valeur du signal du taux de

lacet ($\psi_{Sensor}$) et la valeur redondante ($\psi_{mittel}$) (34), et la valeur redondante est formée à partir d'au moins deux grandeurs basées sur un modèle ($\psi_{mv}$, $\psi_{mL}$).

**2.** Procédé selon la revendication 1, **caractérisé en ce que** la comparaison de la valeur du signal du taux de lacet avec la valeur redondante intervient lorsqu'un compteur (22) atteint une valeur prédéfinie.

**3.** Procédé selon la revendication 1 ou 2, **caractérisé en ce que** le compteur (22) est augmenté en fonction d'un temps écoulé ($\geq$7), au cours duquel le comportement de conduite stationnaire avec mouvement de braquage est déterminé.

**4.** Procédé selon l'une quelconque des revendications 1 à 3, **caractérisé en ce qu'**un comportement de conduite (20) stationnaire est déterminé lorsqu'au moins l'une des conditions suivantes est remplie :

   a) $|\psi_{mL} - \psi_{mq}|$ < une première valeur seuil K1, de préférence 12˚/s, en particulier 7˚/s, $\psi_{mL}$ correspondant à un taux de lacet modèle provenant de l'angle de braquage et/ou de l'accélération transversale,
   b) $|\psi_{mL} - \psi_{mv}|$ < une seconde valeur seuil K2, de préférence 12˚/s, en particulier 7˚/s, $\psi_{mv}$ correspondant à un taux de lacet modèle provenant des vitesses de roue à l'avant,
   c) $|\delta_{LP}|$ < une troisième valeur seuil K3, de préférence 200˚/s, en particulier 100˚/s, $\delta_{LP}$ étant la vitesse d'angle de braquage,
   d) $|a_q|$ < une quatrième valeur seuil K4, de préférence 0,7 g, en particulier 0,5 g, aq étant l'accélération transversale,
   e) un réglage antiblocage (ABS), une répartition électronique de la force de freinage (EBD), un réglage du glissement à l'entraînement en cas d'application des freins (BTCS) n'est pas actif/active,
   f) les roues du véhicule ne présentent pas de comportement de roue instationnaire,
   g) le véhicule ne montre pas de comportement de conduite survireur et/ou
   h) le véhicule ne montre pas de comportement de conduite sous-vireur.

**5.** Procédé selon l'une des revendications 1 à 4, **caractérisé en ce qu'**un braquage est déterminé lorsqu'au moins les conditions suivantes sont satisfaites :

   |angle de braquage| sur la roue > valeur seuil L1, de préférence 1˚, et
   |accélération transversale| > valeur seuil Q1, de préférence 0,081 g.

**6.** Procédé selon l'une des revendications 1 à 5, **caractérisé en ce qu'**au moins l'une des grandeurs suivantes est intégrée dans la formation de la valeur redondante :

   vitesses de roue des roues, la largeur de voie, l'angle de volant, l'empattement, la vitesse du véhicule, la vitesse de référence du véhicule, la vitesse de roulement caractéristique ou la vitesse de braquage.

**7.** Procédé selon la revendication 6, **caractérisé en ce que** la valeur redondante est formée par la formation de la moyenne (32) selon la relation

$$\psi_{mittel} = \frac{(\psi_{m_v} + \psi_{m_L})}{2}$$ de préférence avec $\psi_{mv}$ selon la relation $$\psi_{m_v} = \frac{v_{vr} - v_{vl}}{S}$$ et avec $\psi_{mL}$ selon

la relation $$\psi_{mL} = \frac{\delta_L}{i_L l} \frac{v_{ref}}{\left(1 + \left(\frac{v_{ref}}{v_{ch}}\right)^2\right)} .$$

**8.** Procédé selon l'une des revendications 1 à 7, **caractérisé en ce qu'**une marque (SMAL_POS_GAINFAILURE_ SUSPISHON) est mise en place (52) lorsque la valeur différentielle en pourcentage dépasse une valeur seuil K5 (DELTA_YA>60 %).

**9.** Procédé selon l'une des revendications 1 à 8, **caractérisé en ce qu'**une marque (POS_GAIN_FAILURE_SUSPISHION ou NEG_GAIN_FAILURE_SUSPISHION) est mise en place lorsque la valeur différentielle en pourcentage dépasse une valeur seuil K6 (DELTA_YR > 80 %) ou une valeur seuil K7 (DELTA YR <-50 %).

**10.** Procédé selon l'une des revendications 1 à 9, **caractérisé en ce que** la valeur d'un compteur (60) pour une suspicion d'erreur de graduation positive ou la valeur d'un compteur (60.1) pour une suspicion d'erreur de graduation négative est augmentée lorsqu'une erreur de graduation positive ou négative (>80 %) a été déterminée.

**11.** Procédé selon l'une des revendications 1 à 10, **caractérisé en ce qu'**un seuil d'entrée et/ou de sortie ESP est augmenté d'une valeur ($\psi_{mL}$) redondante basée sur un modèle, qui est pondérée avec un facteur de la valeur différentielle en pourcentage ($\Delta\psi(\%)$) lorsque la valeur du compteur (60, 60.1) dépasse une valeur seuil K8 (70).

**12.** Procédé selon la revendication 11, **caractérisé en ce que** la valeur redondante basée sur un modèle est formée selon la relation suivante $$\psi_{mL} = \frac{\delta_L}{i_L l} \frac{v_{ref}}{\left(1 + \left(\frac{v_{ref}}{v_{ch}}\right)^2\right)}$$ et le seuil d'entrée ESP est et le seuil d'entrée ESP est pondéré avec une valeur de correction (-2°/s).

**13.** Procédé selon l'une des revendications 1 à 12, **caractérisé en ce que** le réglage de la stabilité de conduite est achevé lorsque le compteur (78) a atteint ou dépassé une valeur seuil K9 et que le nombre du dépassement satisfait à une prescription prédéfinie.

**14.** Procédé selon l'une des revendications 1 à 13, **caractérisé en ce que**, lors de l'achèvement du réglage de la stabilité de conduite, on a une entrée d'erreur dans une mémoire d'erreurs.

**15.** Procédé selon l'une des revendications 1 à 14, **caractérisé en ce que** les compteurs sont remis à zéro lorsqu'un état de survirage ESP est déterminé.

**16.** Procédé selon l'une des revendications 1 à 15, **caractérisé en ce que** les compteurs sont remis à zéro lorsqu'aucun dépassement de valeur seuil de graduation (50, 54.1) n'est détecté dans un laps de temps prédéfini dans une courbe stationnaire.

A          B                    C                      D

*54*

DELTA_YR > 80%

*54.1*

DELTA_YR < 80%

*56*

NEG_GAIN_FAILURE_SUSPISHION==1

*561*

POS_GAIN_FAILURE_SUSPISHION==1

*58*

NEG_GAIN_FAILURE_SUSPISHION=0
GAIN_FL_SUSP_CNT_R=0

*58.1*

POS_GAIN_FAILURE_SUSPISHION=0
GAIN_FL_SUSP_CN_RT=0

*60*

POS_GAIN_FAILURE_SUSPISHION=1
GAIN_FL_SUSP_CNT_R++

*60.1*

NEG_GAIN_FAILURE_SUSPISHION=1
GAIN_FL_SUSP_CNT_R++

*70*

GAIN_FL_SUSP_CNT_R > 25 (175msec.)

*72*

AYC_TH_OFFFSET=AYC_TH +DELTA_YR OF YR_SA_FIL
AYC_TH_CORRECTION=1

*74*

GAIN_FL_SUSP_CNT_R > 30 (210msec.)

*76*

GAIN_FAILURE_DETECTED_R++

*78*

GAIN_FAILURE_DETECTED_R > 2
|| GAIN_FAILURE_DETECTED_L > 2
|| (GAIN_FAILURE_DETECTED_&&
GAIN_FAILURE_DETECTED_L)

*80*

SET_FAILURE = GAIN_FAILURE

END
Gain_failure_detection

*98*

14

**IN DER BESCHREIBUNG AUFGEFÜHRTE DOKUMENTE**

**In der Beschreibung aufgeführte Patentdokumente**

- US 5842143 A